# EUROPEAN PATENT APPLICATION

(11) **EP 4 632 358 A1**
(43) Date of publication of application: **15.10.2025**
(21) Application number: 23900662.0
(22) Date of filing: 05.12.2023
(51) Int. Cl.: G01N 21/88

(54) **VISUAL INSPECTION IMAGE TRANSFORMING DEVICE, AND VISUAL INSPECTION IMAGE TRANSFORMING METHOD**

(30) Priority: 07.12.2022 JP 2022195626
(71) Applicant: Saki Corporation, Tokyo 135-0051 (JP)
(72) Inventor: SHINODA, Hiroshi, Tokyo 135-0051 (JP); YAMAMOTO, Yosuke, Tokyo 135-0051 (JP); ITO, Satomi, Tokyo 135-0051 (JP); OSAWA, Masayuki, Tokyo 135-0051 (JP); HIRAIZUMI, Kei, Tokyo 135-0051 (JP)
(74) Representative: Algemeen Octrooi- en Merkenbureau B.V.
(86) International application number: PCT/JP2023/043501
(87) International publication number: WO 2024/122547

(57) **Abstract**

An image convertor for visual inspection to convert images captured by two visual inspection devices, each of which comprises a main imaging unit that vertically captures images of an inspected object to be subjected to visual inspection, and a plurality of light sources installed between the main imaging unit and the inspected object comprises an image storage unit that stores a first image group and a second image group, a training data set generation unit that generates a pair of images in the first image group and corresponding images in the second image group as a training data set and an image conversion model learning unit that performs machine learning using the generated training data set to generate an image conversion model that converts an image in the first image group into the corresponding image in the second image group.

## Description

### TECHNICAL FIELD

The present disclosure relates to an image convertor for visual inspection and an image conversion method for visual inspection.

### BACKGROUND ART

A visual inspection device determines whether an inspected object, such as an electronic component or an electronic circuit board, is good or defective from captured images of the inspected object. In particular, in recent years, appearance inspection technology has been developed that performs appearance inspection using a good/defective judgment model generated by machine learning using images of the inspected object as training data.

### RELATED-ART LITERATURE

Patent Literature 1: JP2022-46895

Non Patent Literature 1: P.F. Alcantarilla, J.Nuevo and A.Bartoli, "Fast Explicit Diffusion for Accelerated Features in Nonlinear Scale Spaces ", In Proc. BMVC2013, pp. 13.1-13.11 (2013) .

### SUMMARY OF INVENTION

### TECHNICAL PROBLEM

An inspection program is applied in order for a visual inspection device to determine whether an inspected object is acceptable or not. This inspection program is generated based on the images captured by the visual inspection device. Therefore, the more images of good and defective products, the better the accuracy and performance of the inspection program. On the other hand, if there are several different configurations of visual inspection devices, the images captured by one visual inspection device differ from those captured by another because the angle, amount of light, and color of the light source projected on the subject differ, resulting in different tints and textures. In addition, the resolution is different because of the different camera and lens configurations. Because of these factors, an image captured by one visual inspection device cannot be used for another visual inspection device without modification.

Patent Literature 1 discloses a technique for converting component installation operation control parameters so that data used in the old equipment can be used in the new equipment. However, this technology is for updating production equipment information that must be adjusted for each equipment in the component installation equipment. Patent Literature 1 also mentions image conversion, however that is only part of the production equipment information and does not cover making the image of the inspected object usable between different visual inspection devices.

The present disclosure addresses the issue described above, and one of its purposes is to enable an image of an inspected object captured by one visual inspection device to be used as an image for visual inspection by another visual inspection device.

### SOLUTION TO PROBLEM

To solve the above problem, an image convertor for visual inspection according to one embodiment of the disclosure is a device intended to convert images captured by two visual inspection devices, each of which comprises a main imaging unit that vertically captures images of an inspected object to be subjected to visual inspection, and a plurality of light sources installed between the main imaging unit and the inspected object. This image convertor for visual inspection comprises an image storage unit that stores a first image group and a second image group, a training data set generation unit that generates a pair of images in the first image group and corresponding images in the second image group as a training data set and an image conversion model learning unit that performs machine learning using the generated training data set to generate an image conversion model that converts an image in the first image group into the corresponding image in the second image group, wherein the first image group is a group of images of the inspected object captured by the first visual inspection device comprising a main imaging unit and a light source and wherein the second image group is a group of images of the same inspected object captured by the second visual inspection device comprising a main imaging unit and a light source in a different configuration from the first visual inspection device.

In one embodiment, the image convertor for visual inspection may comprise a deformation processing unit that deforms the images in the first or second image groups so that the orientation and size of the corresponding images contained in the first and second image groups stored in the image storage unit match.

In one embodiment, the converted image may be used as input data or test data when generating inspection data for the second visual inspection device.

In one embodiment, the light source and the light source may have a ring-shaped emission area, a dome-shaped emission area, a bar-shaped emission area, a point emission area or a surface emission area, respectively.

In one embodiment, the light source of the first visual inspection device and the light source of the second visual inspection device have any wavelength.

In one embodiment, the image convertor for visual inspection may comprise an image comparison unit that compares the difference between the image of the first image group and the corresponding image of the second image group and the difference between the converted image and the corresponding image of the second image group.

In one embodiment, the image comparison unit may quantify the differences between images using the difference in luminance values for each pixel of the same coordinate.

In one embodiment, the image convertor for visual inspection may comprise an inspection result display unit that displays the judgment result of the visual inspection performed on the second image group or a heat map based on the visual inspection, and the judgment result of the visual inspection performed on the conversion image or a heat map based on the visual inspection, wherein the second visual inspection device performs visual inspection using a good/defective judgment model generated by machine learning using images of the inspected object as training data and wherein the good/defective judgment model is learned using only the second image group, using only the converted image or using a combination of the second image group and the converted image.

In one embodiment, the image convertor for visual inspection may comprise a data sorting unit 80 that sorts the converted images into a data set for machine learning, which is used to generate a good/defective judgment model for the second visual inspection device for visual inspection, and a data set for performance evaluation, which is used to evaluate the performance of the second visual inspection device and an inspection performance verification unit that compares the results of the performance evaluation performed using the data set for performance evaluation with the results of the inspection performed by the second visual inspection device using the good/defective judgment model, wherein the second visual inspection device performs visual inspection using a good/defective judgment model generated by machine learning using images of the inspected object as training data.

Another embodiment of this disclosure is an image conversion method for visual inspection that converts images captured by two visual inspection devices comprising a main imaging unit that vertically captures images of an inspected object to be subjected to visual inspection and a plurality of light sources installed between the main imaging unit and the inspected object. This image conversion method for visual inspection comprises an image storing step in which a first image group of the inspected object captured by the first visual inspection device comprising a main imaging unit and a light source and a second image group of the same inspected object captured by the second visual inspection device comprising a main imaging unit and a light source of a different configuration from the first visual inspection device are stored, a training data set generation step in which a pair of images in the first image group and corresponding images in the second image group as a training data set is generated, an image conversion model learning step in which machine learning is performed using the training data set and an image conversion model that converts an image in the first image group into the corresponding image in the second image group is generated and
image conversion step in which a converted image for use in the second visual inspection unit from the image captured by the first visual inspection unit is generated using the generated image conversion model.

In one embodiment, the image conversion method for visual inspection may comprise a deformation processing step in which the images in the first or second image groups are deformed so that the orientation and size of the corresponding images contained in the first and second image groups stored in the image storing step match.

Any combination of the above components, and any conversion of the expressions of the present disclosure between methods, devices, systems, computer programs, data structures, recording media, etc., is also valid as an aspect of the present disclosure.

### ADVANTAGEOUS EFFECTS OF INVENTION

According to the present disclosure, it is possible to use an image of an inspected object captured by one visual inspection device as an image for visual inspection by another visual inspection device.

### BRIEF DESCRIPTION OF THE DRAWINGS

[FIG. 1] Fig. 1 is a functional block diagram of an image convertor for visual inspection according to the first embodiment.
[FIG. 2] Fig. 2 is a schematic diagram of a first visual inspection device.
[FIG. 3] Fig. 3 is a schematic diagram of a second visual inspection device.
[FIG. 4] Fig. 4 is a photograph of a first image group captured by a first visual inspection device.
[FIG. 5] Fig. 5 is a photograph of a first image group captured by a second visual inspection device.
[FIG. 6] Fig. 6 is the image of Fig. 4 converted using a first image convertor for visual inspection.
[FIG. 7] Fig. 7 is a functional block diagram of an image convertor for visual inspection according to the second embodiment.
[FIG. 8] Fig. 8 shows how keypoint matching is performed by a deformation processing unit.
[FIG. 9] Fig. 9 is a functional block diagram of an image convertor for visual inspection according to the third embodiment.
[FIG. 10] Fig. 10 shows a functional block diagram of an image convertor for visual inspection according to the fourth embodiment.
[FIG. 11] Fig. 11 shows the judgment results and heat map of a visual inspection test conducted using the second image group and the converted image for the image of a defective product.
[FIG. 12] Fig. 12 shows the judgment results and heat map of a visual inspection test conducted using the second image group and the converted image for the image of a good product.
[FIG. 13] Fig. 13 shows a functional block diagram of an image convertor for visual inspection according to the fifth embodiment.
[FIG. 14] Fig. 14 is a flowchart showing the process of an image conversion method for visual inspection according to the sixth embodiment.
[FIG. 15] Fig. 15 is a flowchart showing the process of an image conversion method for visual inspection according to the seventh embodiment.

### DESCRIPTION OF EMBODIMENTS

### The first embodiment

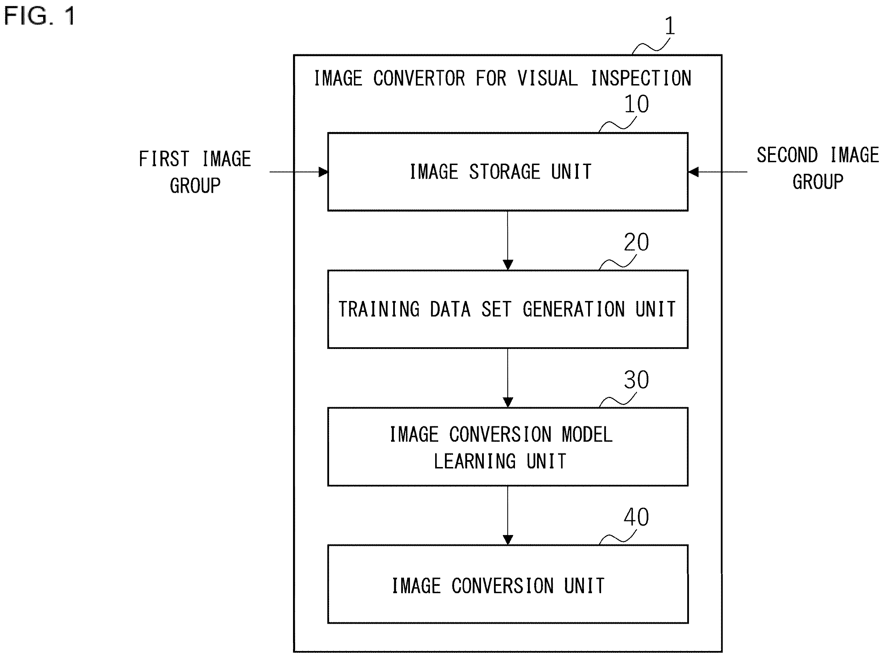

Figure 1 shows a functional block diagram of an image convertor 1 for visual inspection according to the first embodiment. Image convertor 1 for visual inspection is a device intended to convert images captured by two visual inspection devices, each of which comprises a main imaging unit that vertically captures images of an inspected object to be subjected to visual inspection, and a plurality of light sources installed between the main imaging unit and the inspected object. The image convertor 1 for visual inspection includes an image storage unit 10, a training data set generation unit 20, an image conversion model learning unit 30, and an image conversion unit 40.

The image storage unit 10 stores a first image group and a second image group. Here, the first image group is a group of images of the inspected object 9 captured by the first visual inspection device 110 comprising a main imaging unit 111 and a light source 112. The second image group is a group of images of the same inspected object 9 captured by the second visual inspection device 120 comprising a main imaging unit 121 and a light source 122 in a different configuration from the first visual inspection device 110.

The training data set generation unit 20 generates a pair of images in the first image group and corresponding images in the second image group as a training data set.

The image conversion model learning unit 30 performs machine learning using the training data set generated by the training data set generation unit 20 to generate an image conversion model that converts an image in the first image group into the corresponding image in the second image group.

The image conversion unit 40 uses the image conversion model generated by the image conversion model learning unit 30 to generate a converted image for use in the second visual inspection unit 120 from the image captured by the first visual inspection unit 110.

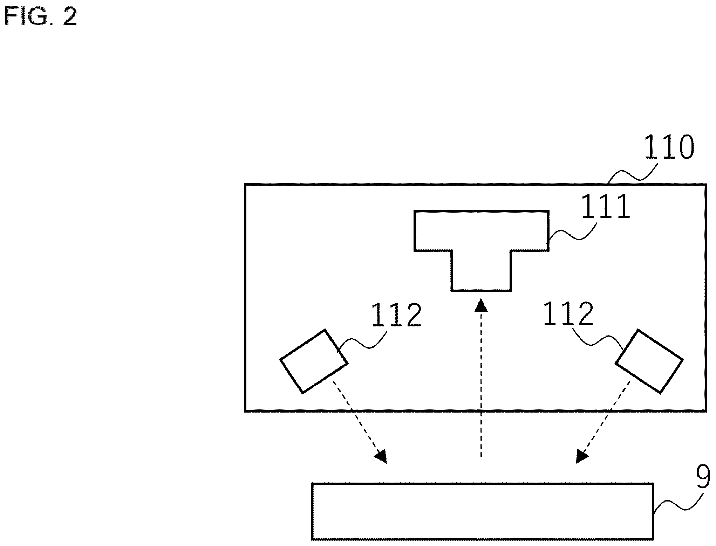

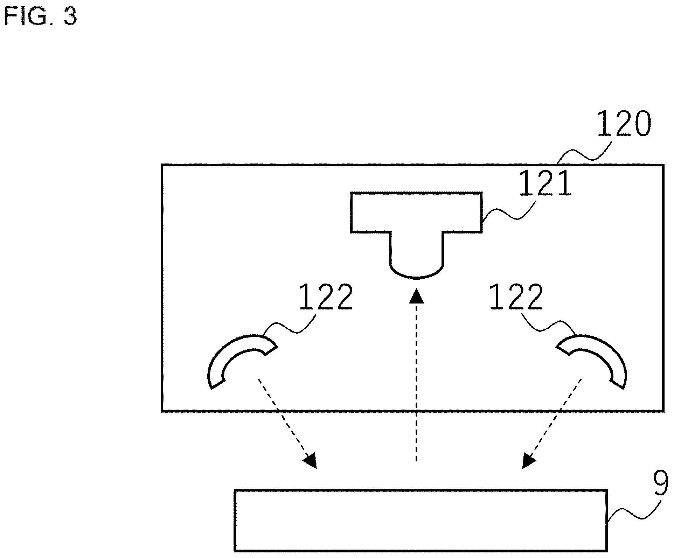

Figure 2 shows a schematic diagram of the first visual inspection device 110. Figure 3 shows a schematic diagram of the second visual inspection device 120. The first visual inspection device 110 includes a main imaging unit 111 that vertically captures images of an inspected object 9 to be subjected to visual inspection, and a plurality of light sources 112 installed between the main imaging unit 111 and the inspected object 9. The second visual inspection device 120 includes a main imaging unit 121 that vertically captures images of the inspected object 9 to be subjected to visual inspection, and a plurality of light sources 122 installed between the main imaging unit 121 and the inspected object 9. The main imaging unit 111 and light source 112 and the main imaging unit 121 and light source 122 have different configurations. In Figure 2 and Figure 3, for reference, the light flux irradiating from the light sources to the inspected object and the light flux incident from the inspected object to the main imaging unit are indicated by dashed arrows.

The first visual inspection device 110 and the second visual inspection device 120 inspect the inspected object 9 using an image of the inspected object 9 obtained by imaging the inspected object 9. The inspected object 9 is, for example, an electronic circuit board on which a number of electronic components are mounted. The first visual inspection device 110 and the second visual inspection device 120 determine whether the electronic components are mounted well or not based on the image of the inspected object. This inspection is usually performed for multiple inspection items for each component. Inspection items are those items necessary to judge whether the product is good or defective. For example, inspection items include items related to the placement of the component, such as missing parts, misalignment, reversed polarity, etc., and items related to the connection between the component and the board, such as soldering condition and floating lead pins of the component.

The main imaging unit 111 and the main imaging unit 121 include an image sensor that generates a two-dimensional image of an object and optical elements, e.g., lenses, for imaging the image onto the image sensor. The main imaging unit 111 and the main imaging unit 121 are, for example, CCD cameras.

The light source 112 and the light source 122 illuminate the surface of the inspected object 9 with illumination light for imaging by the main imaging unit 111 and the main imaging unit 121, respectively. The light source 112 and the light source 122 include a light emitting source that emits light at a wavelength or wavelength range selected from the wavelength range that can be detected by the image sensors of the main imaging unit 111 and the main imaging unit 121.

As an example, the light source 112 and the light source 122 may be light sources having one of a ring-shaped emission area, a dome-shaped emission area, a bar-shaped emission area, a point emission area or a surface emission area, respectively.

The light source 112 of the first visual inspection device 110 and the light source 122 of the second visual inspection device 120 may have any wavelength. For example, the illumination light emitted by the light sources 112 and the light source 122 is not limited to visible light, but may use ultraviolet light, X-rays, etc. If multiple light emitting sources are provided, each light emitting source may be configured to irradiate and project light of different wavelengths, e.g., red, blue and green, onto the surface of the inspected object 9 at different projection angles.

The operation of the image convertor 1 for visual inspection will be described below with reference to Figures 1 to 3. First, a first image group and a second image group captured by the first visual inspection device 110 and the second visual inspection device 120, respectively, are input to the image storage unit 10. The images captured by the respective visual inspection devices have different tints and textures even if they are images of the same object to be inspected, because the first visual inspection device 110 and the second visual inspection device 120 have different configurations of the main imaging unit and the light source. These differences in images are particularly noticeable under different lighting conditions due to differences in light sources. Because of these differences in image tints and textures, images captured by the first visual inspection device 110 cannot be used by the second visual inspection device 120, and conversely, images captured by the second visual inspection device 120 cannot be used by the first visual inspection device 110. The image storage unit 10 stores the first image group and the second image group in order to convert these images captured by the two visual inspection devices using machine learning, which will be explained later.

The training data set generation unit 20 generates pairs of images in the first image group and corresponding images in the second image group stored in the image storage unit 10 as a training data set. The training data set generation unit 20 may generate such pairs of images , i.e., training data sets, in units of 1000 images, for example.

The image conversion model learning unit 30 performs machine learning using the training data set generated by the training data set generation unit 20 to generate an image conversion model that converts an image in the first image group into the corresponding image in the second image group. In other words, the image conversion model learning unit 30 performs machine learning using the images captured by the first visual inspection device 110 and the images captured by the second visual inspection device 120 for the same inspected object 9 as learning data, and generates an image conversion model. When an image of the inspected object 9 captured by the first visual inspection device 110 is input, the image conversion model converts the inspected object 9 and outputs it as if it had been captured by the second visual inspection device 120.

Machine learning may be performed using known AI. The specific method of such AI is not limited, but a neural network such as a convolutional neural network (CNN), for example, may be used, in which the input layer is common and different neural networks may be mixed for each calculation model. In this case, different neural networks may be mixed for each calculation model with a common input layer. Specifically, machine learning models such as U-net and Pix2Pix, which can perform image conversion, may be used.

The image conversion unit 40 uses the image conversion model generated by the image conversion model learning unit 30 to generate a converted image from the image captured by the first visual inspection device 110 for use in the second visual inspection device 120. In other words, the image conversion unit 40 uses the image conversion model described above to convert the image of the inspected object 9 captured by the first visual inspection device 110 into an image as if the inspected object 9 had been captured by the second visual inspection device 120.

The converted image by the image conversion unit 40 may be used as input data or test data when generating inspection data for the second visual inspection device 120. Thus, the converted image from the first image group to the second image group generated by the image convertor 1 for visual inspection may be used as both input data, i.e., training data, and test data in the visual inspection of the second visual inspection device 120.

Thus, according to this embodiment, the image of the inspected object 9 captured by the first visual inspection device 110 can be converted into an image as if it were captured by the second visual inspection device 120, therefore the image of the inspected object 9 captured by the first visual inspection device 110 can also be used by the second visual inspection device 120.

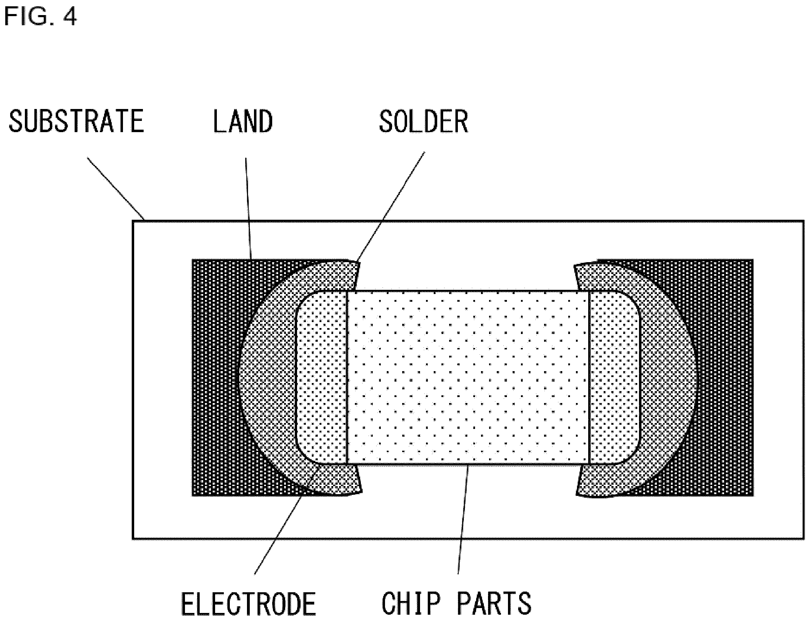

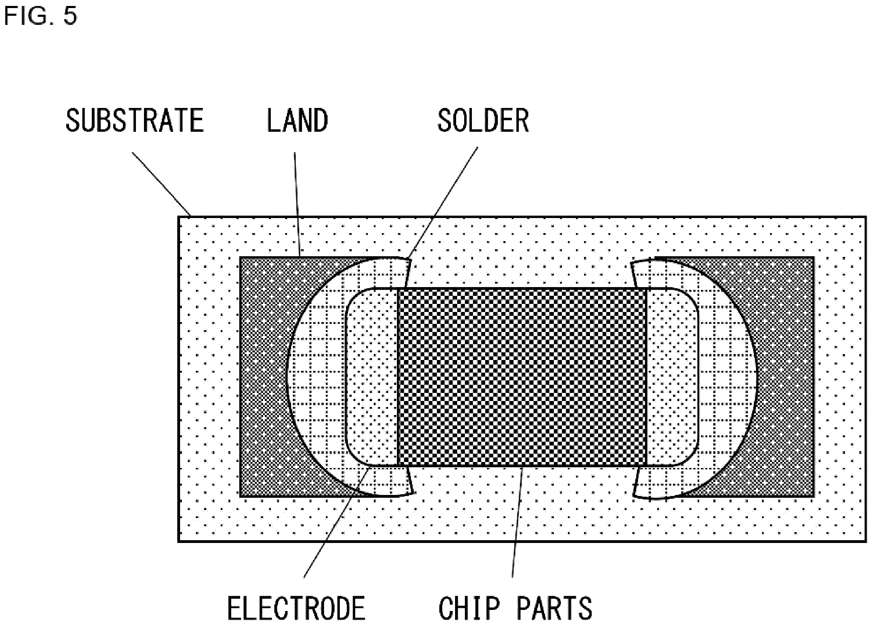

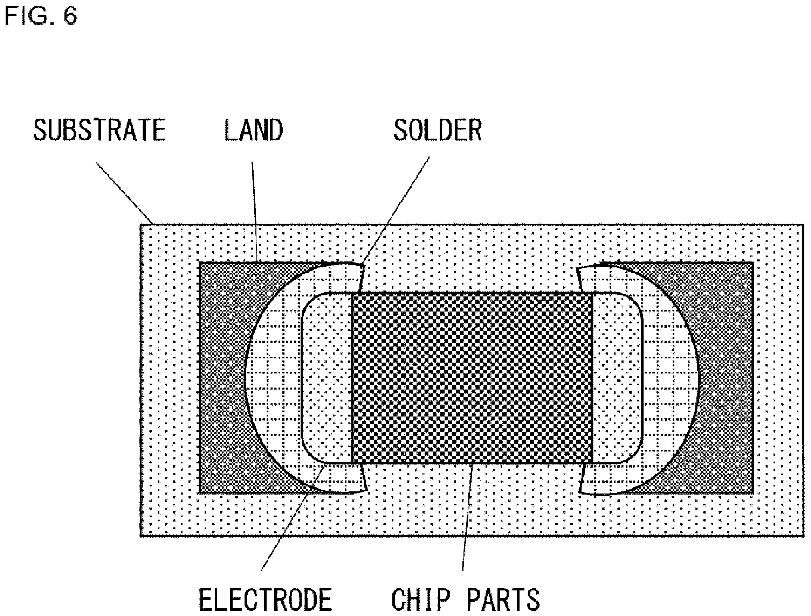

Figure 4 is a photograph of the first image group captured by the first visual inspection device 110. Figure 5 is a photograph of the first image group captured by the second visual inspection device 120. Figure 6 is a converted image of the image in Figure 4 using the image convertor 1 for visual inspection. In Figure 4 and Figure 5, even if the images are of the same inspected object, the tints and textures are significantly different. On the other hand, the images in Figure 5 and Figure 6 are so similar that they are almost indistinguishable to the naked eye. Therefore, the converted image in Figure 6 is considered to be usable with the second visual inspection device 120.

In the above, an example of converting an image in the first image group to the corresponding image in the second image group was described. However, it goes without saying that the same technique described above can be used to convert an image in the second image group to the corresponding image in the first image group, and vice versa.

### The second embodiment

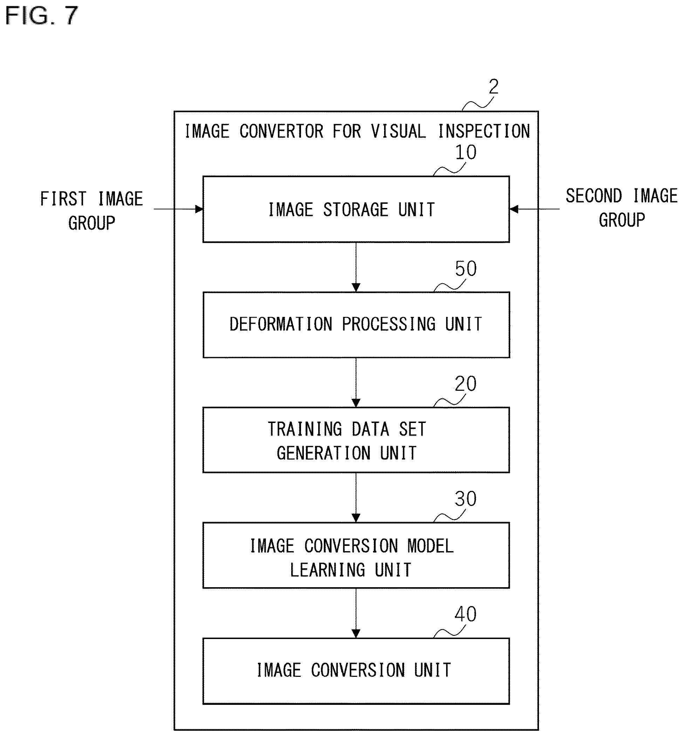

Figure 7 shows a functional block diagram of an image convertor 2 for visual inspection according to the second embodiment. The image convertor 2 for visual inspection includes an image storage unit 10, a deformation processing unit 50, a training data set generation unit 20, an image conversion model learning unit 30, and an image conversion unit 40. In other words, image convertor 2 for visual inspection additionally includes the deformation processing unit 50 compared to the image conversion device 1 for visual inspection shown in Figure 1. Other configurations of the image conversion device 2 for visual inspection are the same as those of the image conversion device 1 for visual inspection.

The deformation processing unit 50 deforms the images in the first or second image groups so that the orientation and size of the corresponding images contained in the first and second image groups stored in the image storage unit 10 match.

The deformation processing by the deformation processing unit 50 may be performed by detecting local features in both corresponding images contained within the first image group and the second image group. In this case, for example, AKAZE, see, e.g., Non Patent Literature 1, may be used to detect points, i.e., keypoints, such as corners and edges that are characteristic of the images, and the corresponding keypoints may be matched between both images. In this way, the deformation processing unit 50 performs deformation processing such as enlargement/reduction, rotation, translation, trapezoidal correction, etc. on the image of the first visual inspection device 110 so that the keypoints are matched.

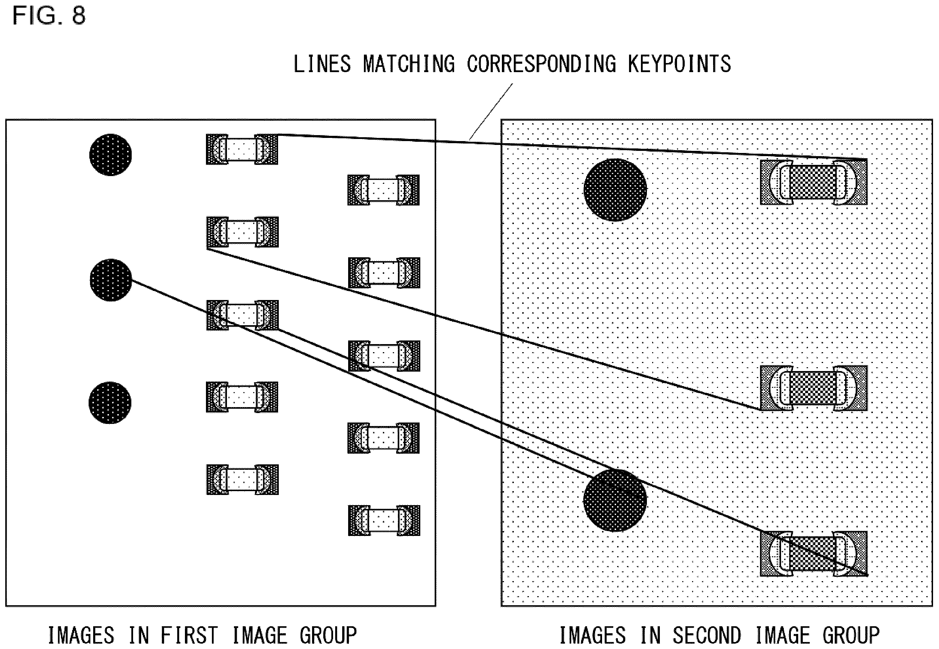

Figure 8 shows how keypoint matching is performed by the deformation processing unit 50.

According to this embodiment, before generating the training data set, the orientation and the size of the corresponding images in the first image group and the second image group are matched to each other, so that a more accurate training data set can be generated.

### The third embodiment

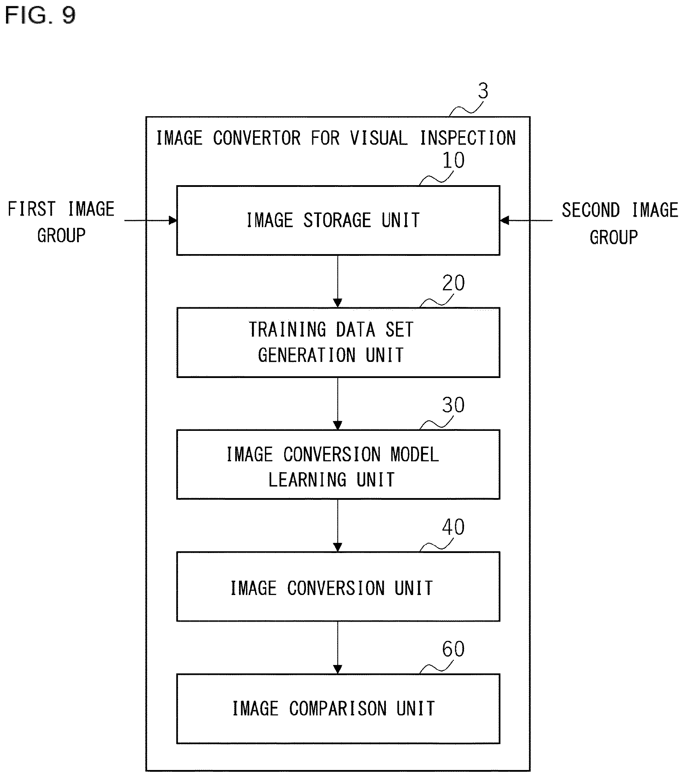

Figure 9 shows a functional block diagram of an image convertor 3 for visual inspection according to the third embodiment. The image convertor 3 for visual inspection includes an image storage unit 10, a training data set generation unit 20, an image conversion model learning unit 30, an image conversion unit 40 and an image comparison unit 60. In other words, the image conversion device 3 for visual inspection additionally includes the image comparison unit 60 compared to the image conversion device 1 for visual inspection shown in Figure 1. Other configurations of the image convertor 3 for visual inspection are the same as those of the image convertor 1 for visual inspection.

The image comparison unit 60 compares the difference between the image of the first image group and the corresponding image of the second image group and the difference between the converted image and the corresponding image of the second image group. As mentioned above, there is a large difference between the image of the first image group and the corresponding image of the second image group due to the difference in the main imaging unit and light source of the first visual inspection device 110 and the second visual inspection device 120. On the other hand, the difference between the converted image and the corresponding image of the second image group is small because the converted image is converted to an image as if it were captured by the second visual inspection device 120. Therefore, as a result of comparing the difference between the image of the first image group and the corresponding image of the second image group and the difference between the converted image and the corresponding image of the second image group, the larger the difference between the differences, the closer the converted image and the corresponding image of the second image group. In other words, the larger the difference between the differences, the higher the quality of the generated conversion image. Thus, the quality of the generated conversion image can be evaluated by comparing the difference between the image of the first image group and the corresponding image of the second image group and the difference between the conversion image and the corresponding image of the second image group by the image comparison unit 60.

In one embodiment, the image comparison unit 60 may quantify the differences between images using the difference in luminance values for each pixel of the same coordinate.

For example, the difference image average luminance value between image A and image B can be defined by the following equation.
[Equation 1]
Here, both image A and image B are formed from N pixels, where PAᵢ is the luminance value of the pixel at the i-th coordinate of image A and PBᵢ is the luminance value of the pixel at the i-th coordinate of image B.

For example, suppose that the difference image average luminance value between the first image group and the corresponding image in the second image group is 20 and the difference image average luminance value between the converted image and the corresponding image in the second image group is 10. In this case, the image conversion using the machine learning model can be considered to have brought the image of the first image group closer to the image of the second image group by a value of 10 of the difference image average luminance.

According to this embodiment, the quality of the generated converted image can be quantitatively evaluated.

### The fourth embodiment

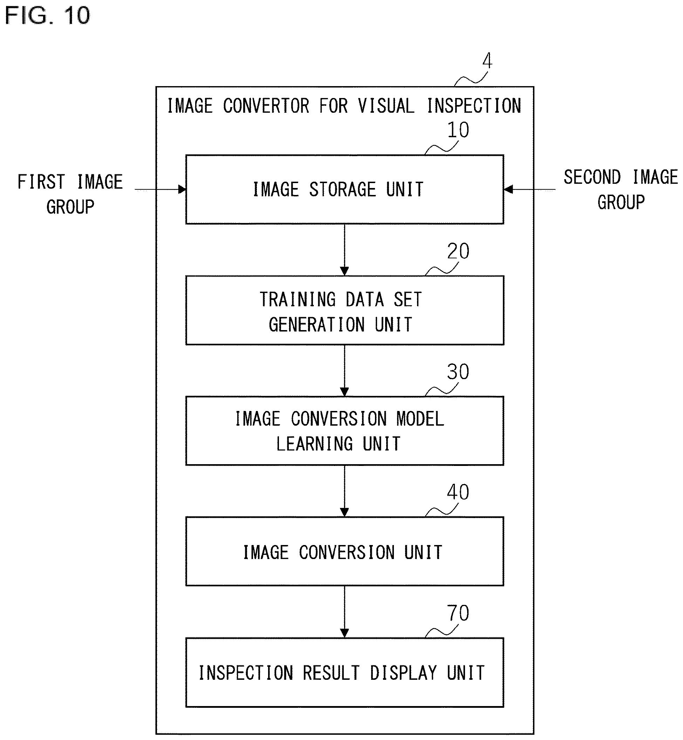

Figure 10 shows a functional block diagram of an image convertor 4 for visual inspection according to the fourth embodiment. The image convertor 4 for visual inspection includes an image storage unit 10, a training data set generation unit 20, an image conversion model learning unit 30, an image conversion unit 40 and an inspection result display unit 70. In other words, the image convertor 4 for visual inspection additionally includes the inspection result display unit 70 compared the image convertor 1 for visual inspection shown in Figure 1. Other configurations of the image convertor 4 for visual inspection are the same as those of the image convertor 1 for visual inspection.

In this embodiment, the first visual inspection device 110 and the second visual inspection device 120 perform visual inspection using a good/defective judgment model generated by machine learning using images of the inspected object as training data. The good/defective judgment model is learned using only the second image group, using only the converted image or using a combination of the second image group and the converted image. The inspection result display unit 70 displays the judgment result of the visual inspection performed on the second image group or a heat map based on the visual inspection, and the judgment result of the visual inspection performed on the conversion image or a heat map based on the visual inspection.

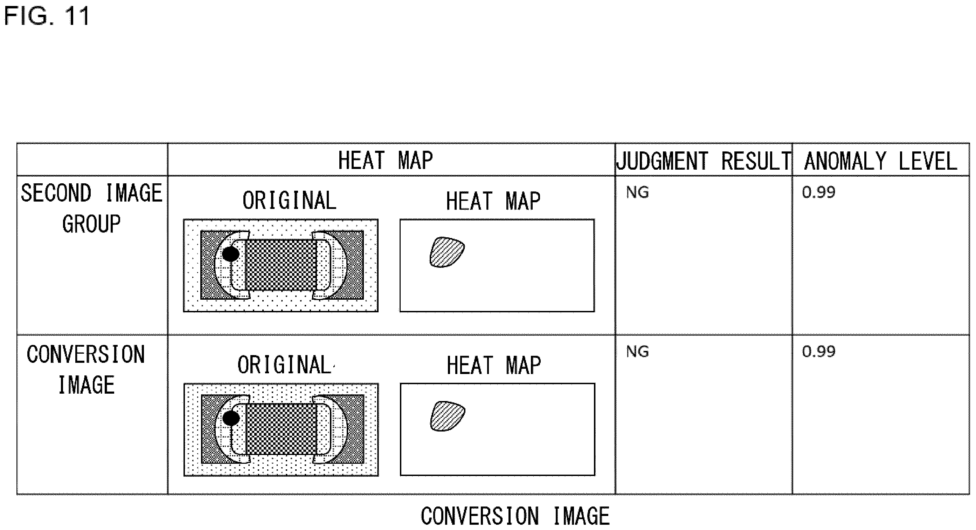

Figure 11 shows the judgment results and the heat map of the visual inspection performed on the defective image using the second image group and the converted image of a defective product.

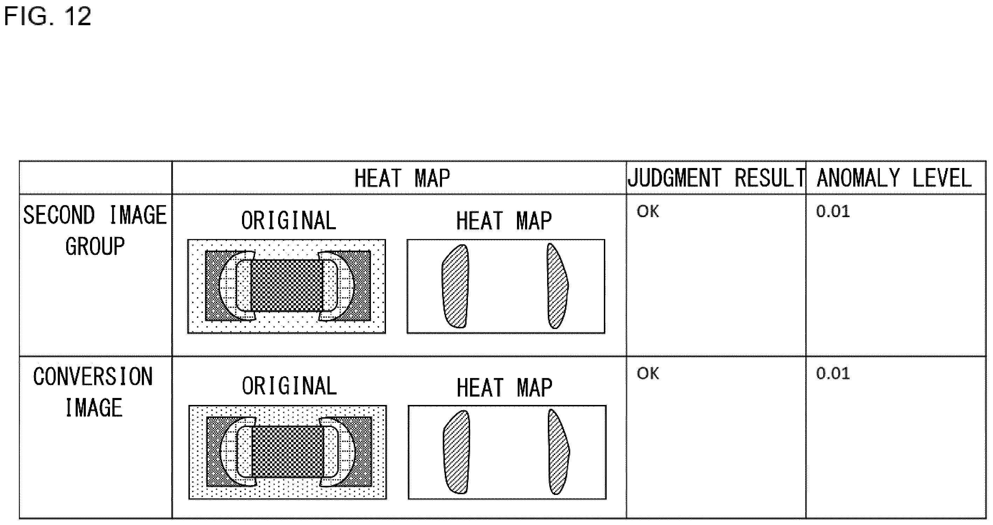

Figure 12 shows the judgment results and the heat map of the visual inspection performed on the defective image using the second image group and the converted image of a good product.

As shown in Figure 11 and Figure 12, for both defective and good products, almost similar results are obtained for the heat map, judgment results and anomaly level between the second image group and the converted image. In other words, in the example above, the first image group, the converted image and the second image group are input to the AI for visual inspection which judges whether the product is good or defective, and the respective heat maps, judgment results and anomaly levels are output. Thus, it can be confirmed that the conversion image can be used in the training of the AI for visual inspection by confirming that the judgment result is the same for the conversion image and the second image group or that the heat map output is similar.

The heatmap may be evaluated using the difference image average luminance values to determine how similar the heatmap appearances are.

### The fifth embodiment

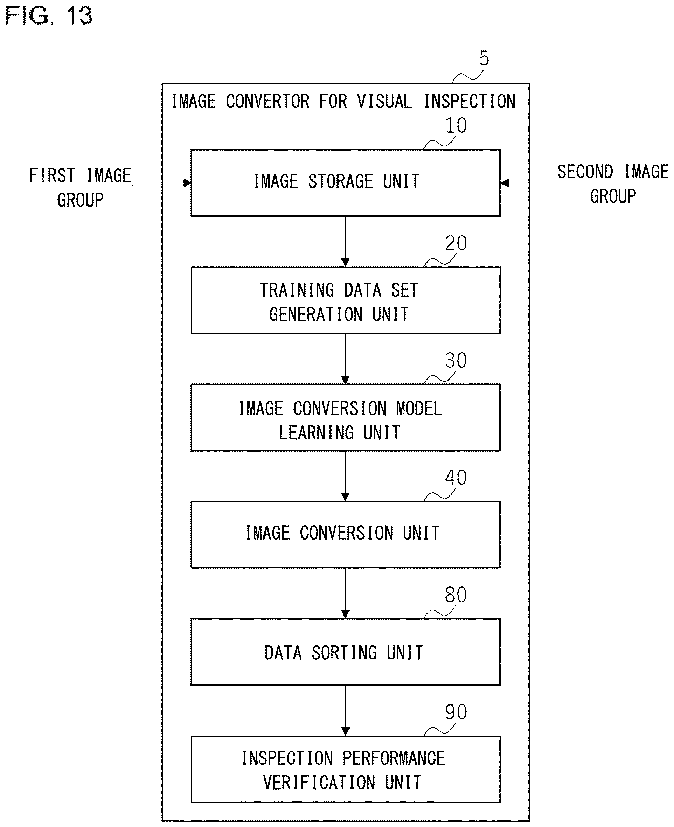

Figure 13 shows a functional block diagram of an image convertor 5 for visual inspection according to the fifth embodiment. The image convertor 5 for visual inspection includes an image storage unit 10, a training data set generation unit 20, an image conversion model learning unit 30, an image conversion unit 40, a data sorting unit 80 and an inspection performance verification unit 90. In other words, the image convertor 5 for visual inspection additionally includes the data sorting unit 80 and the inspection performance verification unit 90 compared the image convertor 1 for visual inspection shown in Figure 1. Other configurations of the image convertor 5 for visual inspection are the same as those of the image convertor 1 for visual inspection.

In this embodiment, the second visual inspection device 120 performs visual inspection using a good/defective judgment model generated by machine learning using images of the inspected object as training data. The data sorting unit 80 sorts the converted images into a data set for machine learning, which is used to generate a good/defective judgment model for the second visual inspection device 120 for visual inspection, and a data set for performance evaluation, which is used to evaluate the performance of the second visual inspection device 120. The inspection performance verification unit 90 compares the results of the performance evaluation performed using the data set for performance evaluation with the results of the inspection performed by the second visual inspection device 120 using the good/defective judgment model. In other words, in this embodiment, a part of the converted images is used for machine learning to generate a good/defective judgment model for the second visual inspection device 120, i.e., data set for learning, and the rest of the converted images is used for performance evaluation of the second visual inspection device 120, I.e., data set for performance evaluation.

Suppose, for example, that the second visual inspection device 120 is a newly introduced visual inspection device. In this case, the data set for performance evaluation can be used to verify the performance of the AI for inspection of this newly introduced visual inspection device. For example, a histogram or t-SNE map of the correct response rate or anomaly distribution of good/defective judgment results may be used for performance verification. Alternatively, the performance evaluation data set can be used for performance verification of logic checking. In this case, the performance verification may use, for example, the correct response rate of the good/defective judgment results.

According to this embodiment, the inspection library of the second visual inspection device 120 can be verified by converting the multiple defective images captured by the first visual inspection device 110 into images captured by the second visual inspection device 120, therefore, the reliability of the inspection of the newly introduced visual inspection device, i.e., the second visual inspection device 120, can be improved.

### The sixth embodiment

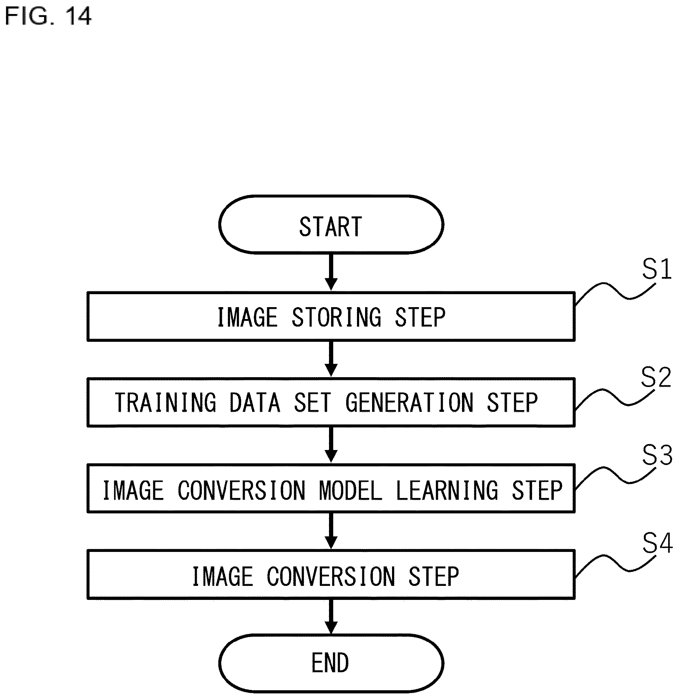

Figure 14 is a flowchart showing the process of an image conversion method for visual inspection according to the sixth embodiment. This method is an image conversion method for visual inspection that converts images captured by two visual inspection devices comprising a main imaging unit that vertically captures images of an inspected object to be subjected to visual inspection and a plurality of light sources installed between the main imaging unit and the inspected object. The method includes an image storing step S1 in which a first image group of the inspected object captured by the first visual inspection device comprising a main imaging unit and a light source and a second image group of the same inspected object captured by the second visual inspection device comprising a main imaging unit and a light source of a different configuration from the first visual inspection device are stored, a training data set generation step S2 in which a pair of images in the first image group and corresponding images in the second image group as a training data set is generated, an image conversion model learning step S3 in which machine learning is performed using the training data set and an image conversion model that converts an image in the first image group into the corresponding image in the second image group is generated and an image conversion step S4 in which a converted image for use in the second visual inspection unit from the image captured by the first visual inspection unit is generated using the generated image conversion model.

According to this embodiment, a computer or the like can be used to perform the process of making an image of an inspected object captured by one visual inspection device usable as an image for visual inspection by another visual inspection device.

### The seventh embodiment

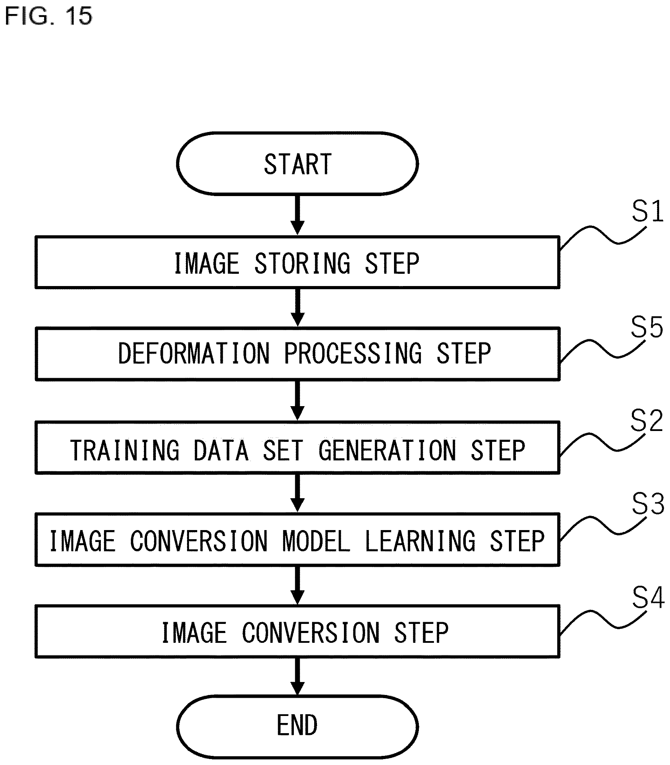

Figure 15 is a flowchart showing the process of an image conversion method for visual inspection according to the seventh embodiment. This method is an image conversion method for visual inspection that converts images captured by two visual inspection devices comprising a main imaging unit that vertically captures images of an inspected object to be subjected to visual inspection and a plurality of light sources installed between the main imaging unit and the inspected object. The method includes an image storing step S1 in which a first image group of the inspected object captured by the first visual inspection device comprising a main imaging unit and a light source and a second image group of the same inspected object captured by the second visual inspection device comprising a main imaging unit and a light source of a different configuration from the first visual inspection device are stored, a deformation processing step S5 in which the images in the first or second image groups are deformed so that the orientation and size of the corresponding images contained in the first and second image groups stored in the image storing step S1 match, a training data set generation step S2 in which a pair of images in the first image group and corresponding images in the second image group as a training data set is generated, an image conversion model learning step S3 in which machine learning is performed using the training data set and an image conversion model that converts an image in the first image group into the corresponding image in the second image group is generated and an image conversion step S4 in which a converted image for use in the second visual inspection unit from the image captured by the first visual inspection unit is generated using the generated image conversion model. In other words, this method additionally includes a deformation processing step S5 after the image storing step S1 compared to the method of Figure 14. The other processes of this method are similar to those of the method of Figure 14.

According to this embodiment, a deformation processing step is performed to match the orientation and size of corresponding images in the first image group and the second image group before the training data set generation step, which allows for a more accurate training data set to be generated.

The invention has been described above based on several embodiments. It is understood by those skilled in the art that these embodiments are examples, that various variations and modifications are possible within the claims of this disclosure, and that such variations and modifications are also within the claims of this disclosure. Accordingly, the description and drawings herein should be treated as illustrative rather than limiting.

Any combination of the above-described embodiments and variations is also useful as an embodiment of the present disclosure. The new embodiments resulting from the combination will have the combined effects of each of the embodiments and variations combined.

In understanding the technical ideas abstracted from the embodiments and variations, the technical ideas should not be interpreted as limited to the contents of the embodiments and variations. The aforementioned embodiments and variations are merely concrete examples, and many design changes, such as changes, additions, and deletions of components, are possible. In the embodiments, the contents where such design changes are possible are emphasized with the notation "embodiments". However, it goes without saying that design changes are also permitted for contents without such notation.

### INDUSTRIAL APPLICABILITY

The image convertor for visual inspection and the image conversion method for visual inspection can be used for visual inspection of electronic components and electronic circuit boards.

### REFERENCE SIGNS LIST

1 image convertor for visual inspection,
9 inspected object,
10 image storage unit,
20 training data set generation unit,
30 image conversion model learning unit,
40 image conversion unit,
50 deformation processing unit,
60 image comparison unit,
70 inspection result display unit,
80 data sorting unit,
90 inspection performance verification unit,
110 first visual inspection device,
111 main imaging unit,
112 light source,
120 second visual inspection device
121 main imaging unit,
122 light source,
S1 image storing step,
S2 training data set generation step,
S3 image conversion model learning step,
S4 image conversion step,
S5 deformation processing step.

## Claims

1. An image convertor for visual inspection that converts images captured by two visual inspection devices, each of which comprises a main imaging unit that vertically captures images of an inspected object to be subjected to visual inspection, and a plurality of light sources installed between the main imaging unit and the inspected object , comprising:
an image storage unit that stores a first image group and a second image group;
a training data set generation unit that generates a pair of images in the first image group and corresponding images in the second image group as a training data set; and
an image conversion model learning unit that performs machine learning using the generated training data set to generate an image conversion model that converts an image in the first image group into the corresponding image in the second image group,
wherein the first image group is a group of images of the inspected object captured by the first visual inspection device comprising a main imaging unit and a light source and
wherein the second image group is a group of images of the same inspected object captured by the second visual inspection device comprising a main imaging unit and a light source in a different configuration from the first visual inspection device.

2. The image convertor according to claim 1, comprising:
a deformation processing unit that deforms the images in the first or second image groups so that the orientation and size of the corresponding images contained in the first and second image groups stored in the image storage unit match.

3. The image convertor according to claim 1 or 2, wherein the converted image is used as input data or test data when generating inspection data for the second visual inspection device.

4. The image convertor according to claim 1 or 2, wherein the light source and the light source have a ring-shaped emission area, a dome-shaped emission area, a bar-shaped emission area, a point emission area or a surface emission area, respectively.

5. The image convertor according to claim 1 or 2, wherein the light source of the first visual inspection device and the light source of the second visual inspection device have any wavelength.

6. The image convertor according to claim 1 or 2, comprising:
an image comparison unit that compares the difference between the image of the first image group and the corresponding image of the second image group and the difference between the converted image and the corresponding image of the second image group.

7. The image convertor according to claim 6, wherein the image comparison unit quantifies the differences between images using the difference in luminance values for each pixel of the same coordinate.

8. The image convertor according to claim 1 or 2 comprising:
an inspection result display unit that displays the judgment result of the visual inspection performed on the second image group or a heat map based on the visual inspection, and the judgment result of the visual inspection performed on the conversion image or a heat map based on the visual inspection,
wherein the second visual inspection device performs visual inspection using a good/defective judgment model generated by machine learning using images of the inspected object as training data and
wherein the good/defective judgment model is learned using only the second image group, using only the converted image or using a combination of the second image group and the converted image.

9. The image convertor according to claim 1 or 2 comprising:
a data sorting unit that sorts the converted images into a data set for machine learning, which is used to generate a good/defective judgment model for the second visual inspection device for visual inspection, and a data set for performance evaluation, which is used to evaluate the performance of the second visual inspection device; and
an inspection performance verification unit that compares the results of the performance evaluation performed using the data set for performance evaluation with the results of the inspection performed by the second visual inspection device using the good/defective judgment model,
wherein the second visual inspection device performs visual inspection using a good/defective judgment model generated by machine learning using images of the inspected object as training data.

10. An image conversion method for visual inspection that converts images captured by two visual inspection devices comprising a main imaging unit that vertically captures images of an inspected object to be subjected to visual inspection and a plurality of light sources installed between the main imaging unit and the inspected object, comprising:
an image storing step in which a first image group of the inspected object captured by the first visual inspection device comprising a main imaging unit and a light source and a second image group of the same inspected object captured by the second visual inspection device comprising a main imaging unit and a light source of a different configuration from the first visual inspection device are stored;
a training data set generation step in which a pair of images in the first image group and corresponding images in the second image group as a training data set is generated;
an image conversion model learning step in which machine learning is performed using the training data set and an image conversion model that converts an image in the first image group into the corresponding image in the second image group is generated; and
image conversion step in which a converted image for use in the second visual inspection unit from the image captured by the first visual inspection unit is generated using the generated image conversion model.

11. The image conversion method for visual inspection according to claim 10, comprising:
a deformation processing step in which the images in the first or second image groups are deformed so that the orientation and size of the corresponding images contained in the first and second image groups stored in the image storing step match.
